# EUROPÄISCHE PATENTSCHRIFT

(11) **EP 3 164 691 B1**
(45) Veröffentlichungstag und Bekanntmachung des Hinweises auf die Patenterteilung: **09.01.2019**
(21) Anmeldenummer: 15728448.0
(22) Anmeldetag: 29.05.2015
(51) Int. Cl.: G01N 15/00, F01N 13/00

(54) **SENSOR ZUR DETEKTION VON TEILCHEN**
SENSOR FOR DETECTING PARTICLES
CAPTEUR DE DÉTECTION DE PARTICULES

(30) Priorität: 02.07.2014 DE 102014212858
(43) Veröffentlichungstag der Anmeldung: 10.05.2017
(73) Patentinhaber: Robert Bosch GmbH, 70442 Stuttgart (DE)
(72) Erfinder: BAARS, Enno, 71229 Leonberg (DE); TIEFENBACH, Andy, 71665 Vaihingen-Horrheim (DE); HOLZKNECHT, Christopher, 70193 Stuttgart (DE); BESSEN, Michael, 70190 Stuttgart (DE); FREIKAMP, Frank, 71254 Ditzingen (DE)
(86) Internationale Anmeldenummer: PCT/EP2015/061981
(87) Internationale Veröffentlichungsnummer: WO 2016/000877

(56) Entgegenhaltungen:
- DE-A1-102006 046 837
- DE-A1-102012 025 078
- DE-A1-102012 217 428
- US-A- 6 015 533
- US-A1- 2012 312 074
- US-A1- 2012 324 981

## Beschreibung

### Stand der Technik

Aus dem Stand der Technik sind zahlreiche Verfahren und Vorrichtungen zur Detektion von Teilchen, wie beispielsweise Ruß- oder Staubpartikeln, bekannt.

Die Erfindung wird im Folgenden, ohne Beschränkung weiterer Ausführungsformen und -anwendungen, insbesondere unter Bezugnahme auf Sensoren zur Detektion von Teilchen, insbesondere von Rußpartikeln in einem Abgasstrom einer Brennkraftmaschine, beschrieben.

Es ist aus der Praxis bekannt, mittels zweier Elektroden, die auf einer Keramik angeordnet sind, eine Konzentration von Teilchen, wie beispielsweise Ruß- oder Staubpartikeln, in einem Abgas zu messen. Dies kann beispielsweise durch eine Messung des elektrischen Widerstands des die beiden Elektroden trennenden keramischen Werkstoffs erfolgen. Genauer wird der elektrische Strom gemessen, der beim Anlegen einer elektrischen Spannung an die Elektroden zwischen diesen fließt. Die Rußpartikel lagern sich aufgrund elektrostatischer Kräfte zwischen den Elektroden ab und bilden mit der Zeit elektrisch leitfähige Brücken zwischen den Elektroden. Je mehr dieser Brücken vorhanden sind, umso mehr steigt der gemessene Strom. Es bildet sich somit ein zunehmender Kurzschluss der Elektroden.

Die DE 102006 046 837 beschreibt einen Sensor welcher in einem äußeren und einem inneren Schutzrohr angebracht ist und von dem partikelhältigen Gas spiralförmig umströmt wird.

Derartige Sensoren werden beispielsweise in einem Abgasstrang einer Brennkraftmaschine, wie beispielsweise einem Verbrennungsmotor der Dieselbauart, eingesetzt. Üblicherweise befinden sich diese Sensoren stromabwärts des Auslassventils bzw. des Rußpartikelfilters.

Trotz der zahlreichen Vorteile der aus dem Stand der Technik bekannten Vorrichtungen zur Detektion von Teilchen beinhalten diese noch Verbesserungspotenzial. Der Partikelsensor dient der Rußmassenbestimmung im Abgastrakt zur Überwachung von Diesel-Partikelfiltern. Der Sensor umfasst ein keramisches Sensorelement, das von einem Schutzrohr umgeben ist. Das keramische Sensorelement weist ein Elektrodensystem auf, das zur Messung des Rußes auf Basis von dessen elektrischer Leitfähigkeit dient. Das Schutzrohr dient unter anderem der Strömungszuführung des Messgases entlang der rußsensitiven Fläche des Sensorelements. Ein häufig verfolgtes Schutzrohrkonzept basiert auf einem Zweifachschutzrohr, d.h. einem äußeren Schutzrohr und einem inneren Schutzrohr. Durch einen Ringspalt zwischen dem äußeren Schutzroh und dem inneren Schutzrohr als Abgaseintrittsspalt wird eine Winkelunabhängigkeit des Sensors erreicht, da das einströmende Abgas gleichmäßig über den Raum zwischen innerem und äußerem Schutzrohr verteilt wird. Der Abgaseintritt in das innere Schutzrohr ist derart gestaltet, dass eine Vorzugsströmung in Richtung der Dichtpackung erreicht wird. Das in diesen Bereich eingetretene Abgas muss dann aufgrund der kaminförmigen Ausgestaltung des inneren Schutzrohres longitudinal entlang des Sensorelements in Richtung Austrittsloch strömen. Damit bewirkt das Schutzrohr eine gleichförmige Überströmung des Sensorelementes in einer Längserstreckungsrichtung des Sensorelements entlang der Hauptelektrodenrichtung bei gleichzeitig geringer Winkelabhängigkeit.

Nachteilig an dieser gleichförmigen, laminaren Überströmung ist, dass zwar viele Rußpartikel das Elektrodensystem überfliegen, aber das Elektrodensystem nicht unbedingt vollständig mit Partikeln beladen wird. Nur Partikel, die in Schichten nahe über der Elektrodenoberfläche strömen, erfahren hinreichend starke Anziehungskräfte durch Elektrophorese und Thermophorese senkrecht zur Hauptströmungsrichtung und werden somit angezogen und bilden sukzessive Rußpfade. Dies erfolgt jedoch nur in Schichten nahe der Elektrodenoberfläche. Ist das elektrische Feld stark genug, tritt sehr rasch eine Anziehung ein und die Partikel bewegen sich nicht mehr weit in Längserstreckungsrichtung des Sensorelements, sondern landen auf dem Elektrodensystem. Alle Partikel in höheren Schichten - der Abstand zwischen Elektrodenoberfläche und innerem Schutzrohr beträgt ein paar Millimeter - erfahren jedoch keine oder nur sehr schwache Kräfte senkrecht zur Flugrichtung und überfliegen somit das Elektrodensystem vollständig und verlassen das Schutzrohr wieder. Daher tragen diese nicht zum Messeffekt bei. Wenn dagegen eine Anziehung erfolgt, geschieht dies sehr schnell und die Beaufschlagung der Elektroden erfolgt nur im vorderen Bereich. Es wird daher die vorhandene Elektrodenfläche nicht vollständig genutzt.

### Offenbarung der Erfindung

Es wird daher ein Sensor zur Detektion von Teilchen, insbesondere von Rußpartikeln vorgeschlagen, welcher die oben beschriebenen Nachteile zumindest weitgehend vermeidet und bei dem die Strömungsführung für die Teilchen so verbessert ist, dass das Sensorelement unabhängig von den äußeren Bedingungen, wie beispielsweise einem Betriebspunkt der Brennkraftmaschine, immer aus der gleichen Richtung überströmt und insbesondere die gesamte Fläche des rußsensitiven Elektrodensystems möglichst gleichmäßig mit Teilchen beaufschlagt wird. Eine dabei vorteilhafte Überströmung der Elektroden entlang der Hauptrichtung des Elektrodensystems muss erfindungsgemäß erhalten bleiben.

Ein erfindungsgemäßer Sensor zur Detektion von Teilchen, insbesondere von Rußpartikeln, umfasst ein Sensorelement mit mindestens zwei Messelektroden, die auf einem Trägersubstrat angeordnet sind, und eine Schutzrohranordnung mit mindestens einem äußeren Schutzrohr und einem inneren Schutzrohr. Das Sensorelement ist in einer Längserstreckungsrichtung in dem inneren Schutzrohr angeordnet. Das äußere Schutzrohr und das innere Schutzrohr sind zum Erlauben eines Zutritts der Teilchen zu dem Sensorelement ausgebildet. Das innere Schutzrohr ist zum Erlauben eines Zutritts der Teilchen zu dem Sensorelement in einer von der Längserstreckungsrichtung abweichenden Richtung ausgebildet.

Das innere Schutzrohr kann Klappen aufweisen, die in Richtung zu dem Sensorelement vorstehen. Das innere Schutzrohr kann Öffnungen aufweisen, die an die Klappen angrenzen. Die Klappen können gegenüber der Längserstreckungsrichtung geneigt sein. Der Sensor kann weiterhin ein Sensorgehäuse umfassen. Das Sensorelement kann in der Längserstreckungsrichtung aus dem Sensorgehäuse herausragen. Die Klappen können unterschiedliche Längen aufweisen. Die Länge der Klappen kann in der Längserstreckungsrichtung von dem Sensorgehäuse weg zunehmen. Die Klappen können an einem den Messelektroden zugewandten Abschnitt des inneren Schutzrohrs angeordnet sein. Der Sensor kann weiterhin ein Sensorgehäuse umfassen. Das Sensorelement kann in der Längserstreckungsrichtung aus dem Sensorgehäuse herausragen. Das innere Schutzrohr kann sich in der Längserstreckungsrichtung von dem Sensorgehäuse weg verjüngen. Das innere Schutzrohr kann sich gleichmäßig oder ungleichmäßig, insbesondere stufenförmig, verjüngen. Der Sensor kann weiterhin ein mittleres Schutzrohr umfassen, das zwischen dem äußeren Schutzrohr und dem inneren Schutzrohr angeordnet ist. Das innere Schutzrohr kann Öffnungen unterschiedlicher Öffnungsflächen aufweisen. Die Öffnungsflächen können in der Längserstreckungsrichtung von dem Sensorgehäuse weg abnehmen. Das innere Schutzrohr kann an einer dem Sensorgehäuse abgewandten Stirnseite mit dem mittleren Schutzrohr verbunden sein. Das innere Schutzrohr kann eine rechteckige, insbesondere quadratische, Querschnittsform bei einem Querschnitt senkrecht zu der Längserstreckungsrichtung aufweisen.

Unter einem Teilchen im Sinne der vorliegenden Erfindung sind insbesondere elektrisch leitfähige Teilchen zu verstehen, wie beispielsweise Ruß- oder Staubpartikel.

Unter Messelektroden sind im Rahmen der vorliegenden Erfindung Elektroden zu verstehen, die für eine Stromspannungsmessung geeignet sind.

Unter einer Stromspannungsmessung ist im Rahmen der vorliegenden Erfindung eine Messung zu verstehen, bei der entweder an die Messelektroden eine bestimmte elektrische Spannung angelegt wird und ein elektrischer Stromfluss zwischen den Messelektroden gemessen wird oder an die Messelektroden ein elektrischer Strom angelegt wird und eine elektrische Spannung zwischen den Messelektroden gemessen wird. Eine Stromspannungsmessung kann insbesondere eine Widerstandsmessung sein, wobei ein Widerstand durch die Messelektroden gemessen werden kann. Es kann beispielsweise eine spannungsgesteuerte oder spannungsgeregelte Messung und/oder eine stromgesteuerte und/oder stromgeregelte Messung erfolgen. Das Anlegen des Stroms und/oder der Spannung kann in Form eines kontinuierlichen Signals und/oder auch in Form eines gepulsten Signals erfolgen. So können beispielsweise eine Gleichspannung und/oder ein Gleichstrom angelegt werden und eine Stromantwort bzw. eine Spannungsantwort erfasst werden. Alternativ können eine gepulste Spannung und/oder ein gepulster Strom angelegt werden und eine Stromantwort bzw. eine Spannungsantwort erfasst werden.

Unter Interdigitalelektroden sind im Rahmen der vorliegenden Erfindung Elektroden zu verstehen, die so angeordnet sind, dass sie ineinander eingreifen, insbesondere kammförmig ineinander eingreifen.

Unter einem elektrisch isolierenden Material ist im Rahmen der vorliegenden Erfindung jedes Material zu verstehen, das geeignet ist, einen Stromfluss zu verhindern. Insbesondere werden im Rahmen der vorliegenden Erfindung elektrisch isolierende Materialien in Form einer Keramik verstanden, die auch bei höheren Temperaturen, wie sie typischerweise in Abgasanlagen von Kraftfahrzeugen auftreten, eine vernachlässigbare elektrische Leitfähigkeit aufweisen. Insbesondere kann dabei Aluminiumoxid verwendet werden.

Unter einer Schicht ist im Rahmen der vorliegenden Erfindung eine einheitliche Masse mit flächenhafter Ausdehnung mit einer gewissen Höhe zu verstehen, die sich auf, unter oder zwischen anderen Bauteilen befinden kann.

Ein Grundgedanke der vorliegenden Erfindung ist ein inneres Schutzrohr mit besonderer Gestaltung, das einen Zutritt der Teilchen, beispielsweise in einem Gasstrom, zur Oberfläche des Sensorelements im Bereich des Elektrodensystems aufteilt, um Partikel aus dem gesamten, ins äußere Schutzrohr eintretenden Gasstrom über das innere Schutzrohr in das elektrische Nahfeld entlang der kompletten Elektroden und letztlich auf die Elektrodenstruktur selbst zu bringen. Somit kann die ganze Elektrodenfläche für die Signalbildung genutzt werden, was mit einer deutlichen Steigerung der Empfindlichkeit einhergeht.

Insbesondere kann ein Dreifachschutzrohr verwendet werden, um sowohl eine Unabhängigkeit gegenüber den unterschiedlichen Betriebsbedingungen resultierend aus dem jeweiligen Motorbetriebspunkt sicherzustellen als auch die Strömungsführung so zu gestalten, dass entlang der gesamten Länge der Sensorelektroden (in x-Richtung) Partikel möglichst gleich verteilt bis ins Nahfeld gelangen können, indem diese senkrecht zur Hauptströmungsrichtung, also in z-Richtung, eine elektrische und/oder thermische Anziehungskraft erfahren und dann an die Elektrodenoberfläche bzw. von den Zwischenräumen angezogen werden, dort anhaften und bei hinreichend langer Beaufschlagung einen leitfähigen Pfad zwischen zwei Elektrodenfingern bilden. Durch die Gestaltung des inneren Schutzrohres mit mehreren Klappen und Öffnungen entlang des gesamten Bereichs über der Elektrodenstruktur (in x-Richtung) erfahren die Strömung und damit die Partikel eine Beschleunigung auch in z-Richtung und können somit entlang der gesamten Elektrodenstruktur ins elektrische Nahfeld gelangen. Der Verbau des Sensorelements kann hierbei auch ungerichtet erfolgen. Hierbei werden mehrere Klappen verteilt über den Umfang/Querschnitt angebracht. Hinsichtlich maximal erzielbarer Sensitivität ist ein gerichteter Verbau des Sensorelements allerdings vorteilhaft. Hierbei genügt es, entlang des Umfanges je nur eine Klappe zu verwenden, die sich jeweils direkt über der Elektrodenfläche des Sensorelements befindet. Im Falle eines gerichteten Verbaus des Sensorelements kann anstelle eines zylindrischen inneren Schutzrohrs auch ein quaderförmiges zu Einsatz kommen.

Bei einer bevorzugten Ausführungsform umfasst das Schutzrohr Klappen mit gestufter Länge, die zu einer besonders gleichmäßigen Beladung der gesamten Elektrodenfläche führen. In einer weiteren Ausführungsform werden für das innere Schutzrohr keine Klappen verwendet, werden sondern Löcher unterschiedlicher, abnehmender Größe in Richtung Stirnseite. Weiterhin sind das innere und das mittlere Schutzrohr stirnseitig mechanisch verbunden. Dadurch werden die Druckverhältnisse so eingestellt, dass ebenfalls eine gleichmäßige Verteilung des Gasstromes und somit der Partikel erreicht wird. Diese Löcher können beispielsweise gestanzt werden, was fertigungstechnisch einfach umsetzbar ist.

Alternativ zu den oben ausgeführten Varianten, überwiegend in Form von Dreifachschutzrohren, sind Ausführungsformen in Form von Zweifachschutzrohren möglich, die ebenfalls die Sensorempfindlichkeit erhöhen, indem diese eine Aufteilung des Gasstromes bewirken und gezielt über die Gesamtlänge der Elektrodenstruktur hinweg Partikel möglichst gleichmäßig ins elektrische Nahfeld verteilen.

Bei einer derartigen Variante befinden sich Klappen im inneren Schutzrohr, die durch Stanzen eingebracht werden und somit zusätzliche Gaseintrittslocher an der Seite bilden. Durch die parallel zu den Elektroden angeordneten Klappen wird die laminare Strömung über dem Sensorelement gestört und somit sichergestellt, dass ein schnellerer Nachtransport von Rußpartikeln in den Nahbereich des Elektrofeldes erfolgt. Gleichzeitig wird durch die Klappen der Heizleistungsbedarf der Sonde bei höheren Abgasgeschwindigkeiten reduziert, weil es zu einem Bypasseffekt kommt, bei dem nicht mehr der gesamte Probenmassenstrom am Sensorelement vorbeigeführt wird. Weiterhin ist die Anlagerung der Rußpartikel nicht mehr abhängig von der Abgasgeschwindigkeit.

Bei einer weiteren Ausführungsform ist das innere Schutzrohr mit Klappen versehen, aber ohne zusätzliche Gaseintrittslocher. Hierbei wird durch eine starke Umlenkung und Verengung des Querschnitts eine Neuvermischung der Strömung erzwungen, so dass im Nahbereich des Sensorelementes wieder neue Partikel zur Abscheidung durch Elektrophorese gelangen können.

Alternativ kann ein inneres Schutzrohr ohne zusätzliche Löcher verwendet werden, das sich aber zur Stirnseite hin, wo sich das Gasaustrittsloch befindet, verjüngt. Die Verjüngung des Querschnitts bewirkt eine Heranführung von Partikeln an das Sensorelement aus Schichten, die im vorderen Abschnitt nicht durch Elektrophorese erreicht werden können.

### Kurze Beschreibung der Zeichnungen

Weitere optionale Einzelheiten und Merkmale der Erfindung ergeben sich aus der nachfolgenden Beschreibung bevorzugter Ausführungsbeispiele, welche in den Figuren schematisch dargestellt sind.

Es zeigen:
- Figur 1: eine Längsschnittansicht eines Sensors zur Detektion von Teilchen gemäß einer ersten Ausführungsform der vorliegenden Erfindung,
- Figur 2: eine Längsschnittansicht eines Sensors zur Detektion von Teilchen gemäß einer zweiten Ausführungsform der vorliegenden Erfindung,
- Figur 3: eine Längsschnittansicht eines Sensors zur Detektion von Teilchen gemäß einer dritten Ausführungsform der vorliegenden Erfindung,
- Figur 4: eine Längsschnittansicht eines Sensors zur Detektion von Teilchen gemäß einer vierten Ausführungsform der vorliegenden Erfindung,
- Figur 5: eine Längsschnittansicht eines Sensors zur Detektion von Teilchen gemäß einer fünften Ausführungsform der vorliegenden Erfindung,
- Figur 6: eine Querschnittsansicht des Sensors der fünften Ausführungsform,
- Figur 7: eine Querschnittsansicht eines Sensors zur Detektion von Teilchen gemäß einer sechsten Ausführungsform der vorliegenden Erfindung,
- Figur 8: eine weitere Querschnittsansicht eines Sensors gemäß der sechsten Ausführungsform,
- Figur 9: eine Querschnittsansicht einer Modifikation des Sensors der sechsten Ausführungsform,
- Figur 10: eine Längsschnittansicht eines Sensors zur Detektion von Teilchen gemäß einer siebten Ausführungsform und
- Figur 11: eine Längsschnittansicht eines Sensors zur Detektion von Teilchen gemäß einer achten Ausführungsform der vorliegenden Erfindung.

### Ausführungsformen der Erfindung

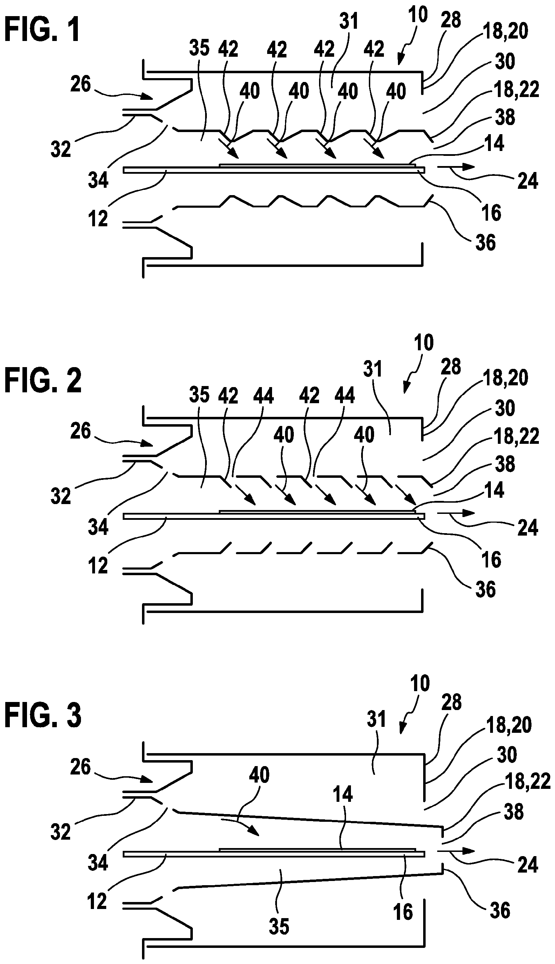

Figur 1 zeigt eine Längsschnittansicht eines Sensors 10 zur Detektion von Teilchen, insbesondere von Rußpartikeln in einem Gasstrom, wie beispielsweise einem Abgasstrom einer Brennkraftmaschine, der zum Einbau in einem Abgasstrang eines Kraftfahrzeugs dient. Beispielsweise ist der Sensor 10 als Rußsensor ausgebildet und bevorzugt stromabwärts eines Rußpartikelfilters eines Kraftfahrzeugs mit einem Dieselverbrennungsmotor angeordnet. Der Sensor 10 umfasst ein Sensorelement 12 mit mindestens zwei Messelektroden 14, die auf einem Trägersubstrat 16 angeordnet sind. Das Trägersubstrat 16 kann aus einem keramischen Material hergestellt sein, wie beispielsweise Siliziumoxid und/oder Aluminiumoxid und/oder Zirkoniumoxid. Die Messelektroden 14 können auf dem Trägersubstrat 16 insbesondere als Interdigitalelektroden angeordnet sein.

Der Sensor 10 umfasst weiterhin eine Schutzrohranordnung 18 mit mindestens einem äußeren Schutzrohr 20 und einem inneren Schutzrohr 22. Das Sensorelement 12 ist in einer Längserstreckungsrichtung 24 in dem inneren Schutzrohr 22 angeordnet. Das äußere Schutzrohr 20 umgibt dabei das innere Schutzrohr 22. Der Sensor 10 weist weiterhin ein Sensorgehäuse 26 auf. Das Sensorelement 12 ist so angeordnet, dass es in der Längserstreckungsrichtung 24 aus dem Sensorgehäuse 26 herausragt.

Das äußere Schutzrohr 20 und das innere Schutzrohr 22 sind zum Erlauben eines Zutritts der Teilchen zu dem Sensorelement 12 ausgebildet, wie nachstehend ausführlicher beschrieben wird. So weist das äußere Schutzrohr 20 an einer dem Sensorgehäuse 26 abgewandten Stirnseite 28 Zutrittsöffnungen 30 auf. Die Zutrittsöffnung 30 ist beispielsweise als Ringspalt ausgebildet. Durch die Zutrittsöffnung 30 können Teilchen in den Zwischenraum 31 zwischen dem äußern Schutzrohr 20 und dem inneren Schutzrohr 22 gelangen. Zum Erlauben eines Zutritts der Teilchen aus dem zwischen dem äußeren Schutzrohr 20 und dem inneren Schutzrohr 22 gebildeten Zwischenraum 31 weist das innere Schutzrohr 22 an einem dem Sensorgehäuse 26 zugewandten hinteren Ende 32 eine Zutrittsöffnung 34 auf. Die Zutrittsöffnung 34 kann dabei gegenüber der Längserstreckungsrichtung 24 geneigt sein. Zum Erlauben eines Austritts der Teilchen aus dem zwischen dem inneren Schutzrohr 22 und dem Sensorelement 12 gebildeten Innenraum 35 weist das innere Schutzrohr 22 an einer dem Sensorgehäuse 26 abgewandten Stirnseite 36 ein Austrittsloch 38 auf. Das innere Schutzrohr 22 ist insbesondere zum Erlauben eines Zutritts der Teilchen zu dem Sensorelement 12 in einer von der Längserstreckungsrichtung 24 abweichenden Richtung 40 ausgebildet. Bei dem gezeigten Ausführungsbeispiel weist das innere Schutzrohr 22 Klappen 42 auf, die in Richtung zu dem Sensorelement 12 vorstehen. Die Klappen 42 sind gegenüber der Längserstreckungsrichtung 24 geneigt. Dadurch wird ein Strom der Teilchen, der durch die Zutrittsöffnungen 34 in den zwischen dem inneren Schutzrohr 22 und dem Sensorelement 12 gebildeten Innenraum 35 gelangt und in Richtung zu dem Austrittsloch 38 strömt, an den Klappen 42 in Richtung zu dem Sensorelement 12 umgelenkt.

Figur 2 zeigt eine Längsschnittansicht eines Sensors 10 zur Detektion von Teilchen gemäß einer zweiten Ausführungsform der vorliegenden Erfindung. Nachstehend werden lediglich die Unterschiede zu der vorhergehenden Ausführungsform beschrieben und gleiche Bauteile sind mit gleichen Bezugszeichen versehen. Bei dem Sensor 10 der zweiten Ausführungsform weist das innere Schutzrohr 22 Öffnungen 44 auf, die an die Klappen 42 angrenzen. Dadurch strömt bereits ein Teil der in den Zwischenraum 31 gelangenden Teilchen durch die Öffnungen 44 und wird an den Klappen 42 in Richtung zu dem Sensorelement 12 abgelenkt. Der übrige Teil der Teilchen gelangt durch die Zutrittsöffnung 34 in den Innenraum 35 und wird wie bei der ersten Ausführungsform bei einer Strömung in Richtung zu dem Austrittsloch 38 an den Klappen 42 in Richtung zu dem Sensorelement 12 abgelenkt.

Figur 3 zeigt eine Längsschnittansicht eines Sensors 10 zur Detektion von Teilchen gemäß einer dritten Ausführungsform der vorliegenden Erfindung. Nachstehend werden lediglich die Unterschiede zu den vorhergehenden Ausführungsformen beschrieben und gleiche Bauteile sind mit gleichen Bezugszeichen versehen. Der Sensor 10 der dritten Ausführungsform weist keine Klappen auf. Stattdessen verjüngt sich das innere Schutzrohr 22 in der Längserstreckungsrichtung 24 von dem Sensorgehäuse 26 weg. Das innere Schutzrohr 22 verjüngt sich insbesondere gleichmäßig, d. h. ein Innendurchmesser des inneren Schutzrohrs 22 nimmt in der Längserstreckungsrichtung 24 von dem Sensorgehäuse 26 weg gleichmäßig ab. Durch die graduelle Verjüngung des inneren Schutzrohrs 22 wird ein Strom der Teilchen, der durch die Zutrittsöffnungen 34 in den zwischen dem inneren Schutzrohr 22 und dem Sensorelement 12 gebildeten Innenraum 35 gelangt und in Richtung zu dem Austrittsloch 38 strömt, in Richtung zu dem Sensorelement 12 gelenkt.

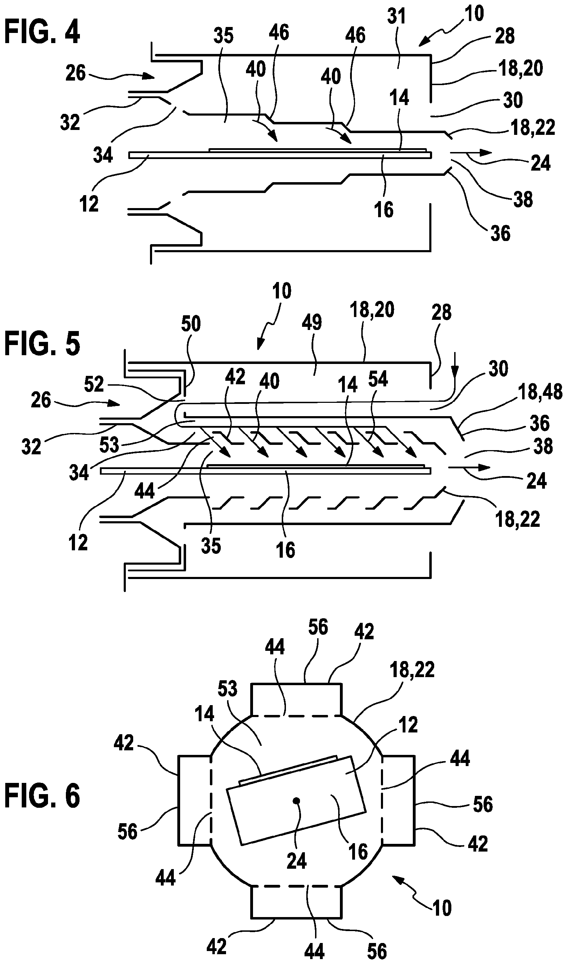

Figur 4 zeigt eine Längsschnittansicht eines Sensors 10 zur Detektion von Teilchen gemäß einer vierten Ausführungsform der vorliegenden Erfindung. Nachstehend werden lediglich die Unterschiede zu den vorhergehenden Ausführungsformen beschrieben und gleiche Bauteile sind mit gleichen Bezugszeichen versehen. Der Sensor 10 der vierten Ausführungsform basiert auf dem Sensor 10 der dritten Ausführungsform. Dabei verjüngt sich das innere Schutzrohr 22 ungleichmäßig. So weist das innere Schutzrohr 22 stufenförmige Verjüngungen 46 auf, so dass sich dieses stufenförmig verjüngt. Durch die stufenförmige Verjüngungen 46 des inneren Schutzrohrs 22 wird ein Strom der Teilchen, der durch die Zutrittsöffnungen 34 in den zwischen dem inneren Schutzrohr 22 und dem Sensorelement 12 gebildeten Innenraum 35 gelangt und in Richtung zu dem Austrittsloch 38 strömt, in Richtung zu dem Sensorelement 12 gelenkt.

Figur 5 zeigt eine Längsschnittansicht eines Sensors 10 zur Detektion von Teilchen gemäß einer fünften Ausführungsform der vorliegenden Erfindung. Nachstehend werden lediglich die Unterschiede zu den vorhergehenden Ausführungsformen beschrieben und gleiche Bauteile sind mit gleichen Bezugszeichen versehen. Der Sensor 10 der fünften Ausführungsform basiert auf dem Sensor 10 der zweiten Ausführungsform. Die Schutzrohranordnung 18 weist weiterhin ein mittleres Schutzrohr 48 auf. Zum Erlauben eines Austritts der Teilchen aus einem Zwischenraum 49 zwischen dem äußeren Schutzrohr 20 und dem mittleren Schutzrohr 48 in Richtung zu der Zutrittsöffnung 34 des inneren Schutzrohrs 22 weist das mittlere Schutzrohr 48 an einem dem Sensorgehäuse 26 zugewandten hinteren Ende 50 eine Zutrittsöffnung 52 auf. Durch die Zutrittsöffnung 34 gelangen die Teilchen In einen zwischen dem mittleren Schutzrohr 48 und dem inneren Schutzrohr 22 gebildeten Zwischenraum 53. Wie durch Pfeile 54 angedeutet, gelangen die Teilchen aus dem zwischen dem mittleren Schutzrohr 48 und dem inneren Schutzrohr 22 gebildeten Zwischenraum 53 durch die an die Klappen 42 angrenzenden Öffnungen 44 in den Innenraum 35 des inneren Schutzrohrs 22 und so zu dem Sensorelement 12.

Figur 6 zeigt eine Querschnittsansicht des Sensors 10 der fünften Ausführungsform. Der Schnitt verläuft dabei senkrecht zur Längserstreckungsrichtung 24. Aus Figur 6 ist zu erkennen, dass das Sensorelement 12 nicht parallel zu einer Reihe von Klappen 42 in der Längserstreckungsrichtung 24 orientiert sein muss. In diesem Fall kann von einem ungerichteten Verbau des Sensorelements 12 gesprochen werden. Das innere Schutzrohr 22 weist dabei einen im Wesentlichen kreisförmigen Querschnitt auf. Des Weiteren ist zu erkennen, dass beispielsweise vier Reihen 56 von Klappen 42 vorgesehen sein können, die in Umfangsrichtung um die Längserstreckungsrichtung 24 gleichmäßig beabstandet und jeweils in Längserstreckungsrichtung 24 angeordnet sind.

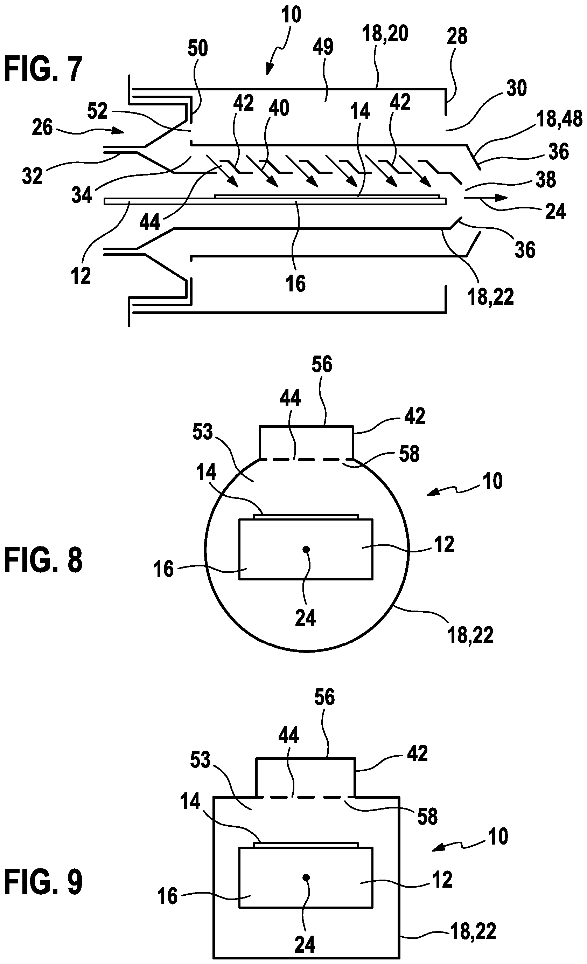

Figur 7 zeigt eine Längsschnittansicht eines Sensors 10 zur Detektion von Teilchen gemäß einer sechsten Ausführungsform der vorliegenden Erfindung. Nachstehend werden lediglich die Unterschiede zu den vorhergehenden Ausführungsformen beschrieben und gleiche Bauteile sind mit gleichen Bezugszeichen versehen. Der Sensor 10 der sechsten Ausführungsform basiert auf dem Sensor der fünften Ausführungsform. Der Sensor 10 der sechsten Ausführungsform ist so ausgebildet, dass die Klappen 42 an einem den Messelektroden 14 zugewandten Abschnitt 58 des inneren Schutzrohrs 22 angeordnet sind. In übrigen Abschnitten des inneren Schutzrohrs 22 sind keine Klappen 42 und Öffnungen 44 vorgesehen.

Figur 8 zeigt eine Querschnittsansicht des Sensors 10 gemäß der sechsten Ausführungsform. Der Schnitt verläuft dabei senkrecht zur Längserstreckungsrichtung 24. Figur 8 verdeutlicht die Ausführungen zu Figur 7. Deutlich ist zu erkennen, dass die Klappen 42 nur an dem den Messelektroden 14 zugewandten Abschnitt 58 des inneren Schutzrohrs 22 angeordnet sind und ansonsten in Umfangsrichtung keine Klappen 42 vorgesehen sind.

Figur 9 zeigt eine Querschnittsansicht des Sensors 10 gemäß einer Modifikation der sechsten Ausführungsform. Bei dieser Modifikation weist das innere Schutzrohr 22 einen rechteckigen und insbesondere quadratischen Querschnitt auf. Der Querschnitt ist dabei senkrecht zu der Längserstreckungsrichtung 24 gesehen.

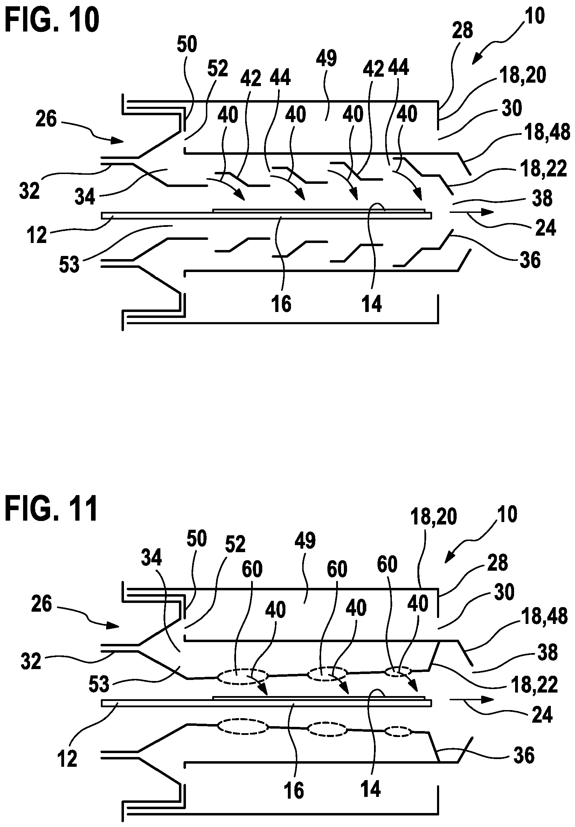

Figur 10 zeigt eine Längsschnittansicht eines Sensors 10 zur Detektion von Teilchen gemäß einer siebten Ausführungsform der vorliegenden Erfindung. Nachstehend werden lediglich die Unterschiede zu den vorhergehenden Ausführungsformen beschrieben und gleiche Bauteile sind mit gleichen Bezugszeichen versehen. Der Sensor 10 der siebten Ausführungsform basiert auf dem Sensor 10 der fünften Ausführungsform. Die Klappen 42 weisen unterschiedliche Längen auf. Die Länge der Klappen 42 nimmt in der Längserstreckungsrichtung 24 von dem Sensorgehäuse 26 weg zu. Mit anderen Worten weisen diejenigen Klappen 42, die sich weiter von dem Sensorgehäuse 26 in Längserstreckungsrichtung 24 weg befinden, eine größere Länge als diejenigen Klappen 42 auf, die sich näher an dem Sensorgehäuse 26 befinden.

Figur 11 zeigt eine Längsschnittansicht eines Sensors 10 zur Detektion von Teilchen gemäß einer achten Ausführungsform der vorliegenden Erfindung. Nachstehend werden lediglich die Unterschiede zu den vorhergehenden Ausführungsformen beschrieben und gleiche Bauteile sind mit gleichen Bezugszeichen versehen. Der Sensor 10 der achten Ausführungsform basiert auf dem Sensor 10 der fünften Ausführungsform. Anstelle von Klappen 42 weist das innere Schutzrohr 22 Öffnungen 60 auf. Die Öffnungen 58 60 weisen unterschiedliche Öffnungsflächen auf. Die Öffnungsflächen nehmen in der Längserstreckungsrichtung 24 von dem Sensorgehäuse 26 weg ab. Mit anderen Worten weisen diejenigen Öffnungen 60, die sich in der Längserstreckungsrichtung 24 weiter weg von dem Sensorgehäuse 26 befinden, kleinere Öffnungsflächen als diejenigen Öffnungen 60 auf, die sich näher an dem Sensorgehäuse 26 befinden.

## Patentansprüche

1. Sensor (10) zur Detektion von Teilchen, insbesondere von Rußpartikeln, umfassend ein Sensorelement (12) mit mindestens zwei Messelektroden (14), die auf einem Trägersubstrat (16) angeordnet sind, und eine Schutzrohranordnung (18) mit mindestens einem äußeren Schutzrohr (20) und einem inneren Schutzrohr (22), wobei das Sensorelement (12) in einer Längserstreckungsrichtung (24) in dem inneren Schutzrohr (22) angeordnet ist, wobei das äußere Schutzrohr (20) und das innere Schutzrohr (22) zum Erlauben eines Zutritt der Teilchen zu dem Sensorelement (12) ausgebildet sind, wobei das innere Schutzrohr (22) zum Erlauben eines Zutritts der Teilchen zu dem Sensorelement (12) in einer von der Längserstreckungsrichtung (24) abweichenden Richtung (40) ausgebildet ist **dadurch gekennzeichnet dass** eine Überströmung der Elektroden entlang der Längserstreckungsrichtung (24) des Sensorelements (12) erhalten bleibt.

2. Sensor (10) nach dem vorhergehenden Anspruch, wobei das innere Schutzrohr (22) Klappen (42) aufweist, die in Richtung zu dem Sensorelement (12) vorstehen.

3. Sensor (10) nach dem vorhergehenden Anspruch, wobei das innere Schutzrohr (22) Öffnungen (44) aufweist, die an die Klappen (42) angrenzen.

4. Sensor (10) nach einem der beiden vorhergehenden Ansprüche, wobei die Klappen (42) gegenüber der Längserstreckungsrichtung (24) geneigt sind.

5. Sensor (10) nach einem der drei vorhergehenden Ansprüche, weiterhin umfassend ein Sensorgehäuse (26), wobei das Sensorelement (12) in der Längserstreckungsrichtung (24) aus dem Sensorgehäuse (26) herausragt, wobei die Klappen (42) unterschiedliche Längen aufweisen, wobei die Länge der Klappen (42) in der Längserstreckungsrichtung (24) von dem Sensorgehäuse (26) weg zunimmt.

6. Sensor (10) nach einem der vier vorhergehenden Ansprüche, wobei die Klappen (42) an einem den Messelektroden (14) zugewandten Abschnitt (58) des inneren Schutzrohrs (22) angeordnet sind.

7. Sensor (10) nach einem der vorhergehenden Ansprüche, weiterhin umfassend ein Sensorgehäuse (26), wobei das Sensorelement (12) in der Längserstreckungsrichtung (24) aus dem Sensorgehäuse (26) herausragt, wobei sich das innere Schutzrohr (22) in der Längserstreckungsrichtung (24) von dem Sensorgehäuse (26) weg verjüngt.

8. Sensor (10) nach dem vorhergehenden Anspruch, wobei sich das innere Schutzrohr (22) gleichmäßig oder ungleichmäßig, insbesondere stufenförmig, verjüngt.

9. Sensor (10) nach einem der vorhergehenden Ansprüche, weiterhin umfassend ein mittleres Schutzrohr, das zwischen dem äußeren Schutzrohr (20) und dem inneren Schutzrohr (22) angeordnet ist.

10. Sensor (10) nach dem vorhergehenden Anspruch, weiterhin umfassend ein Sensorgehäuse (26), wobei das Sensorelement (12) in der Längserstreckungsrichtung (24) aus dem Sensorgehäuse (26) herausragt, wobei das innere Schutzrohr (22) Öffnungen (60) unterschiedlicher Öffnungsflächen aufweist, wobei die Öffnungsflächen in der Längserstreckungsrichtung (24) von dem Sensorgehäuse (26) weg abnehmen.

11. Sensor (10) nach dem vorhergehenden Anspruch, wobei das innere Schutzrohr (22) an einer dem Sensorgehäuse (26) abgewandten Stirnseite (36) mit dem mittleren Schutzrohr verbunden ist.

12. Sensor (10) nach einem der vorhergehenden Ansprüche, wobei das innere Schutzrohr (22) eine rechteckige, insbesondere quadratische, Querschnittsform bei einem Querschnitt senkrecht zu der Längserstreckungsrichtung (24) aufweist.

## Claims

1. Sensor (10) for detecting particles, in particular soot particles, comprising a sensor element (12) having at least two measuring electrodes (14), which are arranged on a carrier substrate (16), and a protective tube assembly (18) having at least one outer protective tube (20) and an inner protective tube (22), the sensor element (12) being arranged in the inner protective tube (22) in a longitudinal extension direction (24), the outer protective tube (20) and the inner protective tube (22) being designed to permit entry of the particles to the sensor element (12), the inner protective tube (22) being designed to permit entry of the particles to the sensor element (12) in a direction (40) deviating from the longitudinal extension direction (24), **characterized in that** a flow over the electrodes along the longitudinal extension direction (24) of the sensor element (12) is maintained.

2. Sensor (10) according to the preceding claim, wherein the inner protective tube (22) has flaps (42) which project in the direction towards the sensor element (12).

3. Sensor (10) according to the preceding claim, wherein the inner protective tube (22) has openings (44) which adjoin the flaps (42).

4. Sensor (10) according to one of the two preceding claims, wherein the flaps (42) are inclined with respect to the longitudinal extension direction (24) .

5. Sensor (10) according to one of the three preceding claims, further comprising a sensor housing (26), wherein the sensor element (12) projects out of the sensor housing (26) in the longitudinal extension direction (24), wherein the flaps (42) have different lengths, wherein the length of the flaps (42) increases away from the sensor housing (26) in the longitudinal extension direction (24).

6. Sensor (10) according to one of the four preceding claims, wherein the flaps (42) are arranged on a section (58) of the inner protective tube (22) that faces the measuring electrodes (14).

7. Sensor (10) according to one of the preceding claims, further comprising a sensor housing (26), wherein the sensor element (12) projects out of the sensor housing (26) in the longitudinal extension direction (24), wherein the inner protective tube (22) tapers away from the sensor housing (26) in the longitudinal extension direction (24).

8. Sensor (10) according to the preceding claim, wherein the innerprotective tube (22) tapers uniformly or non-uniformly, in particular in steps.

9. Sensor (10) according to one of the preceding claims, further comprising a central protective tube, which is arranged between the outer protective tube (20) and the inner protective tube (22) .

10. Sensor (10) according to the preceding claim, further comprising a sensor housing (26), wherein the sensor element (12) projects out of the sensor housing (26) in the longitudinal extension direction (24), wherein the inner protective tube (22) has openings (60) with different opening areas, wherein the opening areas decrease away from the sensor housing (26) in the longitudinal extension direction (24).

11. Sensor (10) according to the preceding claim, wherein the inner protective tube (22) is connected to the central protective tube at a front end (36) facing away from the sensor housing (26) .

12. Sensor (10) according to one of the preceding claims, wherein the inner protective tube (22) has a rectangular, in particular square, cross-sectional shape in a cross section perpendicular to the longitudinal extension direction (24).

## Revendications

1. Capteur (10) servant à détecter des particules, en particulier des particules de suie, comprenant un élément capteur (12) équipé d'au moins deux électrodes de mesure (14) disposées sur un substrat de support (16), et un ensemble de tubes de protection (18) comportant au moins un tube de protection extérieur (20) et un tube de protection intérieur (22), dans lequel l'élément capteur (12) est disposé dans le tube de protection intérieur (22) dans une direction d'extension longitudinale (24), dans lequel le tube de protection extérieur (20) et le tube de protection intérieur (22) sont conçus de manière à permettre aux particules d'accéder à l'élément capteur (12), dans lequel le tube de protection intérieur (22) est conçu pour permettre aux particules d'accéder à l'élément capteur (12) dans une direction (40) s'écartant de la direction d'extension longitudinale (24), **caractérisé en ce qu'**un dépassement des électrodes dans la direction d'extension longitudinale (24) de l'élément capteur (12) est maintenu.

2. Capteur (10) selon la revendication précédente, dans lequel le tube de protection intérieur (22) présente des volets (42) dépassant vers l'élément capteur (12).

3. Capteur (10) selon la revendication précédente, dans lequel le tube de protection intérieur (22) présente des ouvertures (44) qui sont adjacentes aux volets (42).

4. Capteur (10) selon l'une des deux revendications précédentes, dans lequel les volets (42) sont inclinés par rapport à la direction d'extension longitudinale (24) .

5. Capteur (10) selon l'une des trois revendications précédentes, comprenant en outre un boîtier de capteur (26), dans lequel l'élément capteur (12) fait saillie hors du boîtier de capteur (26) dans la direction d'extension longitudinale (24), dans lequel les volets (42) présentent des longueurs différentes, dans lequel la longueur des volets (42) augmente dans la direction d'extension longitudinale (24) lorsqu'on s'éloigne du boîtier du capteur (26).

6. Capteur (10) selon l'une des quatre revendications précédentes, dans lequel les volets (42) sont disposés sur une partie (58) du tube de protection intérieur (22) qui est tournée vers les électrodes de mesure (14).

7. Capteur (10) selon l'une des revendications précédentes, comprenant en outre un boîtier de capteur (26), dans lequel l'élément capteur (12) fait saillie hors du boîtier de capteur (26) dans la direction d'extension longitudinale (24), dans lequel le tube de protection intérieur (22) se rétrécit dans la direction d'extension longitudinale (24) lorsqu'on s'éloigne du boîtier du capteur (26).

8. Capteur (10) selon la revendication précédente, dans lequel le tube de protection intérieur (22) se rétrécit uniformément ou non uniformément, en particulier par paliers.

9. Capteur (10) selon l'une des revendications précédentes, comprenant en outre un tube de protection central disposé entre le tube de protection extérieur (20) et le tube de protection intérieur (22).

10. Capteur (10) selon la revendication précédente, comprenant en outre un boîtier de capteur (26) dans lequel l'élément capteur (12) fait saillie hors du boîtier de capteur (26) dans la direction d'extension longitudinale (24), dans lequel le tube de protection intérieur (22) présente des ouvertures (60) ayant des surfaces d'ouverture différentes, dans lequel les surfaces d'ouverture décroissent dans la direction d'extension longitudinale (24) lorsqu'on s'éloigne du boîtier de capteur (26).

11. Capteur (10) selon la revendication précédente, dans lequel le tube de protection intérieur (22) est relié au tube de protection central sur une face avant (36) qui est tournée à l'opposé du boîtier de capteur (26).

12. Capteur (10) selon l'une des revendications précédentes, dans lequel le tube de protection intérieur (22) présente une forme de section transversale rectangulaire, en particulier carrée, pour une section perpendiculaire à la direction d'extension longitudinale (24) .
